# FASCICULE DE BREVET EUROPEEN

(11) **EP 0 888 495 B1**
(45) Date de publication et mention de la délivrance du brevet: **03.11.1999**
(21) Numéro de dépôt: 97914406.0
(22) Date de dépôt: 14.03.1997
(51) Int. Cl.: F02B 27/02

(54) **COLLECTEUR D'ADMISSION D'AIR, A ELEMENT ESCAMOTABLE A CONDUIT ACOUSTIQUE, POUR MOTEURS A COMBUSTION INTERNE**
EINLASSKRÜMMER MIT SCHWENKBAREM, MIT EINEM AKUSTISCHEN KANAL VERSEHENEN ELEMENT FÜR BRENNKRAFTMASCHINEN
INTERNAL COMBUSTION ENGINE AIR INTAKE MANIFOLD WITH A RETRACTABLE ELEMENT HAVING AN ACOUSTIC BORE

(30) Priorité: 19.03.1996 FR 9603399
(43) Date de publication de la demande: 07.01.1999
(73) Titulaire: MAGNETI MARELLI FRANCE, 92002 Nanterre Cédex (FR)
(72) Inventeur: GUICHARD, Alain, F-93330 Neuilly-sur-Marne (FR); PONTOPPIDAN, Michael, F-92500 Rueil-Malmaison (FR)
(74) Mandataire: Bérogin, Francis
(86) Numéro de dépôt international: FR9700467
(87) Numéro de publication internationale: WO9735103

(56) Documents cités:
- EP-A- 0 355 960
- DE-A- 4 317 563
- FR-A- 2 577 646
- FR-A- 2 724 418

## Description

La présente invention concerne les collecteurs d'admission d'air, pour l'équipement de moteurs à combustion interne alimentés en carburant par injection, en particulier pour véhicules automobiles.

L'invention se rapporte plus précisément à un tel collecteur d'admission, du type comprenant, pour chaque chambre de combustion du moteur, un conduit d'air dont une partie aval comprend un unique tronçon de tube, raccordé à au moins une bride de fixation à la culasse du moteur, et dont une partie amont comprend deux tronçons de tube, dont un tronçon amont court et un tronçon amont long, alimentés chacun en air par son entrée amont, depuis des moyens de commande du débit d'air d'alimentation du moteur, tels qu'un corps papillon, la sortie aval de chaque tronçon de tube amont étant destinée à être mise en communication avec l'entrée amont de l'unique tronçon de tube aval.

Pour des raisons d'émission de bruit, et pour chaque conduit d'air, il est connu de relier le porte-injecteur, réalisé sous la forme d'un élément de faibles dimensions et masse réduite dans un collecteur d'admission, aux autres éléments de ce collecteur par un manchon flexible, maintenu fixé au bloc moteur par au moins un amortisseur de vibrations généralement dénommé "silent bloc".

Pour qu'un tel collecteur d'admission présente, en réponse aux différents régimes de fonctionnement du moteur, une loi acoustique favorable au bon remplissage du moteur, c'est-à-dire au transfert au moteur de la colonne d'air aspirée à travers une impédance minimale, il est connu de donner une géométrie variable au collecteur, en faisant plus particulièrement varier la longueur des conduits d'air, dont chacun s'étend entre des moyens de commande du débit d'air d'alimentation du moteur, tels qu'un corps papillon, et la culasse du moteur, pour l'alimentation en air d'un cylindre de ce dernier.

A cet effet, il est connu que chaque conduit d'air comprenne deux tubes en parallèle, ou que sa partie amont comprenne deux tronçons de tube en parallèle qui se raccordent en se prolongeant par un même tronçon de tube aval, en série vers l'aval avec les deux tronçons de tube amont, et qu'un organe d'étranglement ou volet soit monté pivotant dans respectivement l'un des deux tubes ou l'un des deux tronçons de tube amont, et commandé de sorte à obturer plus ou moins ce tube ou tronçon de tube amont, selon le régime de fonctionnement du moteur, de sorte que soit obtenue une variation équivalente à une variation de longueur et/ou de diamètre du conduit d'air.

Toutefois, ces réalisations connues ont pour inconvénient que, selon les régimes de fonctionnement du moteur, l'un seulement des tubes ou tronçons de tube amont ou simultanément les deux tubes ou tronçons de tube est ou sont parcouru(s) par l'air, mais non l'un ou l'autre, de sorte que la réponse acoustique du conduit d'air n'est pas parfaitement appropriée aux besoins, en raison de résonnances parasites.

Pour remédier à l'inconvénient précité de tels collecteurs d'admission à géométrie variable, et obtenir un collecteur d'admission permettant d'étendre la plage de charge du moteur pour laquelle l'impédance acoustique du collecteur est la plus favorable, il est connu, par EP-A-355 960, un collecteur d'admission du type présenté ci-dessus, et dans lequel la mise en communication de la sortie aval de chaque tronçon de tube amont avec l'entrée amont de l'unique tronçon de tube aval est assurée par un élément monté entre les parties amont et aval de chaque conduit d'air, et traversé d'un conduit acoustique, ledit élément étant mobile entre deux positions extrêmes, dans l'une desquelles ledit élément obture ledit tronçon de tube amont court alors que son conduit acoustique raccorde ledit tronçon de tube amont long audit tronçon de tube aval, tandis que dans l'autre position extrême, ledit élément obture ledit tronçon de tube amont long alors que son conduit acoustique raccorde ledit tronçon de tube amont court audit tronçon de tube aval.

Ce collecteur permet ainsi de mettre l'un ou l'autre des deux tronçons de tube amont en série avec l'unique tronçon de tube aval, le tronçon de tube amont long permettant d'obtenir un conduit d'air le plus long possible, convenant aux faibles régimes du moteur car accordé aux basses fréquences de résonnance, tandis que le tronçon de tube amont court, en série avec l'unique tronçon de tube aval, permet d'obtenir un conduit d'air le plus court possible, convenant au fonctionnement du moteur à hauts régimes, car accordé à de hautes fréquences de résonnance.

Ce collecteur d'admission procure ainsi une réponse acoustique mieux adaptée au régime moteur.

Toutefois, l'élément mobile de EP-A-355 960 est une vanne rotative cylindrique, qui tourne sur elle-même, autour de son axe, d'environ un tiers de tour pour passer de l'une à l'autre des positions extrêmes, ce qui est désavantgeux pour sa commande et impose des réalisations bien ajustées, donc coûteuses, si on veut éviter des problèmes d'étanchéité entre les conduits d'air.

Le problème à la base de l'invention est de proposer un collecteur d'admission du type connu par EP-A-355 960, mais qui convienne mieux que ceux décrits dans ce document aux diverses exigences de la pratique, en particulier pour ce qui concerne la compacité, la simplicité et l'économie de réalisation de la commande de l'élément mobile, son amplitude de mouvement et les moyens pour assurer son étanchéité.

Pour remédier à ces inconvénients, le collecteur selon l'invention se caractérise en ce que l'élément mobile est un élément escamotable, logé et monté basculant dans un capot, et qui présente, perpendiculairement à son axe de basculement, deux faces latérales qui glissent sans contact frottant chacune sur l'une respectivement de deux faces latérales du capot lorsque ledit élément escamotable bascule dans ledit capot, de manière à assurer par effet de laminage une bonne étanchéité latérale entre l'élément et son capot.

Avantageusement, l'élément escamotable est réalisé de sorte que son conduit acoustique est délimité entre deux obturateurs dudit élément, dont chacun obture l'un respectivement desdits tronçons de tube amont court et long dans l'une respectivement desdites positions extrêmes.

L'élément escamotable de chaque conduit d'air est avantageusement intégré au reste de la structure du collecteur d'admission si, de plus le capot dans lequel l'élément escamotable est logé et monté pivotant, est solidaire d'un corps de collecteur délimitant un plenum alimenté en air par lesdits moyens de commande de débit d'air, et dans lequel chacun des tronçons de tube amont court et long de chaque conduit s'ouvre par son entrée amont. Cette structure est favorable à la réalisation d'une pièce, par exemple en matière de synthèse, du corps de collecteur avec les tronçons de tube amont court et long et les capots logeant chacun un élément escamotable et présentant avantageusement de plus, du côté de la sortie du conduit acoustique de l'élément escamotable correspondant, un embout tubulaire destiné à être raccordé de manière étanche au tronçon de tube aval correspondant, la pièce ainsi formée pouvant présenter une bride de liaison du collecteur aux moyens de commande de débit d'air, tel qu'un corps papillon, cette bride étant percée d'une entrée d'air vers le plenum. Par ailleurs, les tronçons de tube aval des différents conduits d'air peuvent être également réalisés d'une seule pièce avec une bride de liaison à la culasse du moteur, cette pièce présentant, au niveau sensiblement du raccordement de chaque tronçon de tube aval et de la bride, un logement pour un injecteur de carburant correspondant.

Ainsi, le collecteur d'admission est réalisé par l'assemblage, au niveau des embouts tubulaires de sortie des capots et des entrées amont des tronçons de tube aval, des deux pièces précitées et chacune d'un seul tenant, à partir d'éléments moulés par exemple en une matière de synthèse.

Afin d'améliorer la compacité du collecteur, il est de plus avantageux que chaque tronçon de tube amont long s'étende au moins partiellement à l'intérieur dudit corps de collecteur, le long d'une face interne de ce corps de collecteur, sur au moins une partie de la périphérie du plenum.

Pour faciliter le pivotement de chaque élément escamotable entre ses positions extrêmes, il est avantageux qu'il présente un moyeu traversé par un axe de manoeuvre par lequel cet élément escamotable est pivoté.

Avantageusement, tous les éléments escamotables sont simultanément entraînés à pivotement par un unique axe de manoeuvre présentant, pour chaque élément escamotable, une portée de centrage, d'indexation et d'entraînement en rotation qui se loge dans un alésage de forme correspondante du moyeu de l'élément escamotable correspondant. Par exemple, lesdites portées peuvent avoir une section transversale de forme carrée et se loger dans des alésages de section carrée correspondante des moyeux des éléments escamotables, les portées pouvant être moulées d'une seule pièce avec l'axe de manoeuvre ou rapportées, par exemple sous forme de manchons, et retenues par tout moyen connu sur un unique axe cylindrique, éventuellement avec un jeu axial par rapport à cet axe, afin de favoriser la rotation des éléments escamotables dans les capots.

Pour l'entraînement en rotation de l'axe commun de manoeuvre, une extrémité de cet axe peut faire saillie à l'extérieur du corps de collecteur et des capots, et être attaquée soit directement par un actionneur, tel qu'un moteur électrique, soit par un embiellage la reliant à un actionneur, par exemple du type pneumatique à membrane.

En outre, pour adapter la réponse acoustique du collecteur à un régime moteur particulier, par exemple intermédiaire entre les hauts et bas régimes, chaque élément escamotable peut être avantageusement immobilisé, par certains des moyens de manoeuvre précités, dans une position intermédiaire entre les deux positions extrêmes précitées, afin d'assurer une obstruction partielle et simultanée des deux tronçons de tube amont. Ce mode de fonctionnement du collecteur est rendu possible grâce au passage progressif que permet chaque élément escamotable entre les configurations longue et courte du conduit d'air correspondant.

De plus, le conduit acoustique de chaque élément escamotable présente avantageusement une section transversale assurant la continuité de section, en forme et/ou en dimension, entre ledit tronçon de tube aval, d'une part, et, d'autre part, chacun desdits tronçons de tube amont. Ainsi, les différents tronçons de tube peuvent avoir une même forme de section transversale, mais une section de surface progressivement décroissante, la transition de la surface de section étant progressivement assurée dans le conduit acoustique de l'élément escamotable. Mais le conduit acoustique peut également présenter une forme évolutive de sa section transversale, de sorte à assurer progressivement l'évolution de la forme de section du conduit d'air entre l'un ou l'autre tronçon de tube amont présentant une section transversale d'une même première forme, et l'unique tronçon de tube aval présentant une section transversale ayant une seconde forme.

D'une manière générale, toute adaptation de section entre les parties amont et aval de chaque conduit d'air peut être assurée dans la zone de transition que constitue le conduit acoustique de l'élément escamotable correspondant.

D'autres caractéristiques et avantages de l'invention découleront de la description donnée ci-dessous, à titre non limitatif, d'un exemple de réalisation décrit en référence aux dessins annexés sur lesquels :
- la figure 1 représente schématiquement, en partie en coupe axiale et en partie en élévation latérale, un exemple de collecteur d'admission à élément escamotable basculant entre les parties amont et aval de chaque conduit d'air,
- les figures 2 et 3 sont des vues partielles du collecteur de la figure 1, limitées à un élément escamotable basculant représenté respectivement dans l'une et l'autre de ses deux positions extrêmes correspondant aux configurations respectivement courte et longue d'un conduit d'air,
- la figure 4 est une coupe selon IV-IV de la figure 1, et
- la figure 5 est un schéma de moyens de commande des basculements des éléments escamotables du collecteur des figures 1 à 4.

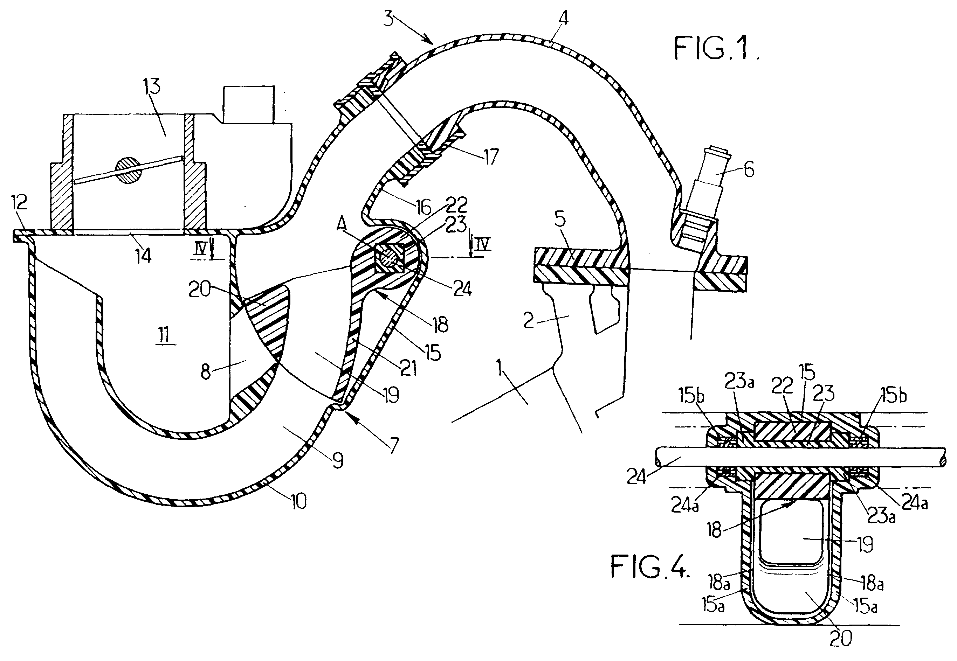

Le collecteur d'admission résonnant à géométrie variable et commandée, pour présenter des propriétés acoustiques améliorées, et à architecture intégrée, est représenté dans son ensemble sur la figure 1 comme étant fixé à la culasse schématisée en 2 d'un moteur à combustion interne alimenté en carburant par injection et du type à quatre cylindres en ligne et à quatre temps, dont le bloc moteur est schématisé en 1.

Le collecteur d'admission comprend quatre conduits d'air 3, disposés côte-à-côte pour alimenter chacun l'un respectivement des quatre cylindres du moteur, et un seul conduit d'air est décrit ci-dessous en référence aux figures 1 à 4, car leur structure est pratiquement identique d'un conduit à l'autre.

Chaque conduit d'air 3 comprend une partie aval constituée d'un tube aval 4 cintré, à concavité tournée vers le bloc moteur 1, et dont l'extrémité aval est solidaire d'une unique bride 5 de fixation du collecteur sur la culasse 2 à l'aide de vis ou boulons (non représentés). En position adjacente à l'extrémité aval du tube aval 4, la bride 5 présente un logement pour un injecteur de carburant 6, qui peut être de tout type connu approprié. Ce logement d'injecteur 6 débouche dans un orifice correspondant de la bride 5, cet orifice constituant simultanément la sortie aval du tube aval 4, et donc du conduit d'air 3, pour alimenter une chambre de combustion du moteur 1 en air et en carburant injecté par l'injecteur 6.

Chaque conduit d'air 3 comprend également une partie amont 7, qui comprend elle-même deux tubes amont 8 et 9 de différentes longueurs, dont le tube 8 est court et l'autre tube 9 est long. Ces deux tubes amont 8 et 9 sont réalisés dans un corps de collecteur 10, qui est commun aux parties amont des quatre tubes d'air 3, et qui délimite une chambre interne ou plenum 11 et est fermé par une bride amont 12, sur la face externe de laquelle un corps papillon 13 est fixé centré autour d'une ouverture 14 ménagée dans la bride 12 pour constituer une entrée d'alimentation en air du plenum 11.

Le tube amont court 8 traverse la paroi latérale du corps 10 qui est tournée du côté du tube aval 4 correspondant, tandis que le tube amont long 9 s'étend, sur la majeure partie de sa longueur, à l'intérieur du corps 10, contre la face interne de ce corps 10, dont il suit la courbure de sorte que ce tube amont long 9 s'étend sur une partie de la périphérie du plenum 11. Chacun des deux tubes amont 8 et 9 s'ouvre ainsi, par son entrée amont, dans le plenum 11, et chacun d'eux s'ouvre également par sa sortie aval dans un capot 15 solidaire du corps 10.

Ce capot 15 a sensiblement la forme d'un tronçon de prisme de section transversale (dans le plan de la figure 1) sensiblement triangulaire à sommet arrondi en regard d'une base non plane mais cintrée à concavité tournée vers le sommet arrondi. Latéralement, du côté du corps papillon 13, le capot 15 présente un embout de sortie tubulaire 16, légèrement cintré dans la même direction que le tube aval 4, et dont l'extrémité de sortie aval est raccordée de manière étanche à l'entrée amont du tube aval 4 par un manchon flexible 17, de structure connue, dans lequel les deux extrémités en regard de l'embout tubulaire 16 et du tube aval 4 sont emmanchées et retenues, par exemple par encliquetage élastique. De manière connue, le manchon flexible 17 assure le raccordement étanche entre l'embout tubulaire 16 de sortie du capot 15 et le tube aval 4.

Dans chaque capot 15, un élément basculant 18, traversé d'un canal 19 appelé conduit acoustique, est monté pivotant autour d'un axe géométrique A perpendiculaire au plan de la figure 1.

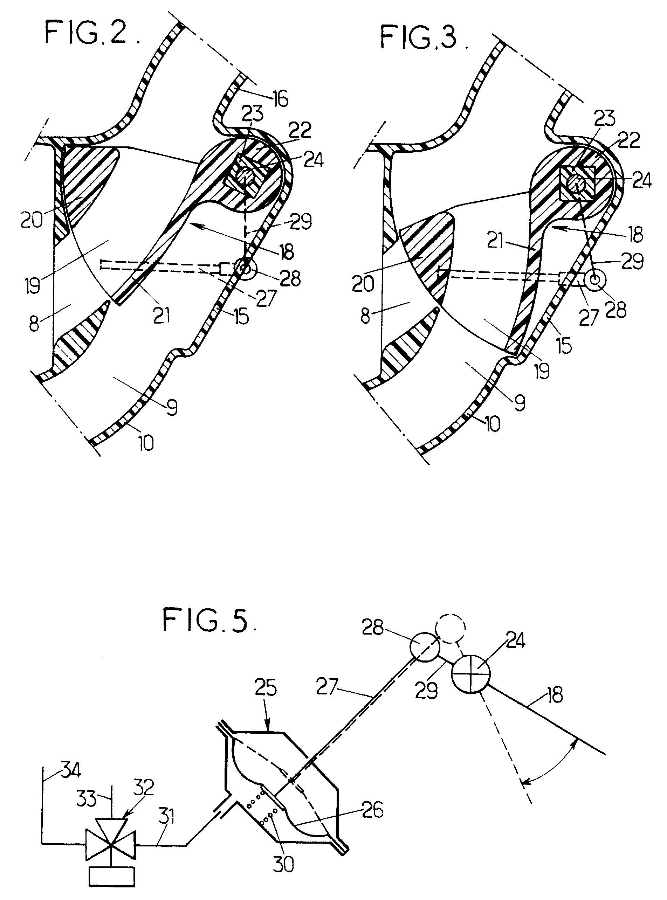

Dans l'élément basculant 18, le conduit acoustique 19 est délimité entre deux obturateurs 20 et 21, tous deux en porte-à-faux d'un même côté d'un moyeu 22 par lequel l'élément 18, logé dans le capot 15, est monté pivotant. Ce moyeu 22 est reçu dans une chambre latérale délimitée dans le capot 15 par le sommet arrondi de ce dernier et le côté qui lui est adjacent, du côté opposé à l'embout tubulaire 16. Celui des deux obturateurs 20 et 21 qui est le plus éloigné du moyeu 22 présente sensiblement une forme massive de galet 20, tandis que l'autre obturateur, directement adjacent au moyeu 22, a la forme d'une languette 21. L'élément 18 peut basculer dans son capot 15 entre deux positions extrêmes, représentées sur les figures 2 et 3, et dans l'une desquelles (figure 2) la languette 21 obture le prolongement, dans le capot 15, du tube amont long 9, tandis que le conduit acoustique 19 prolonge le tube amont court 8 et met ce dernier en communication avec l'embout tubulaire 16 de sortie, et donc avec le tube aval 4. Cette position correspond à une configuration courte du tube d'air 4, dont la longueur peut alors être de l'ordre de 300 à 400 mm par exemple.

Dans l'autre position extrême (figure 3), l'élément 18 est basculé de sorte que sa languette 21 s'escamote sensiblement dans la chambre latérale du capot 15 et son obturateur massif 20 obture totalement la sortie aval du tube amont court 8, alors que le conduit acoustique 19 est dans le prolongement du tube amont long 9 et met ce dernier en communication avec l'embout tubulaire 16, et donc avec le tube aval 4. Cette position correspond à une configuration longue du conduit d'air 3, dans laquelle ce dernier a une longueur pouvant atteindre de 500 à 600 mm environ.

Ainsi, en commandant le basculement de l'élément 18 de l'une à l'autre de ses deux positions extrêmes, on commande la variation de la longueur du conduit d'air 3 correspondant. Chaque élément basculant 18 avec son conduit acoustique 19 et ses deux obturateurs 20 et 21 constitue, avec le capot 15 correspondant, un système à géométrie variable pour le conduit d'air 3 correspondant. La configuration courte de la figure 2 est adoptée aux régimes élevés du moteur, tandis que la configuration longue de la figure 3 convient aux bas régimes.

L'élément basculant 18 remplit ainsi le rôle d'un aiguillage dans le système à géométrie variable pour diriger l'air admis dans le plenum 11, au travers du corps papillon 13, jusqu'au tube aval 4 en passant soit par le tube amont court 8 et le conduit acoustique 19, soit par le tube amont long 9 et le conduit 19.

Ainsi l'un seulement des deux tubes amont 8 et 9 est actif, ce qui élimine les résonnances parasites. Le passage de l'une à l'autre des deux configurations est progressif, et, si la commande du basculement de l'élément 18 le permet, il est également possible de maintenir ce dernier dans une position intermédiaire, dans laquelle l'obturateur en languette 21 n'obture que partiellement la sortie du tube amont long 9, et dans laquelle simultanément l'obturateur massif 20 n'obture que partiellement la sortie du tube amont court 8, ce qui peut être favorable au réglage de l'impédance acoustique du collecteur pour un régime moteur intermédiaire entre des régimes bas et élevés.

Par construction, l'élément basculant 18 est monté dans son logement 15 avec de faibles tolérances latérales (voir figure 4) afin que les deux faces latérales 18a de l'élément 18, qui s'étendent dans deux plans parallèles au plan des figures 1 à 3, puissent glisser sur les faces latérales 15a du capot 15 sans contact frottant, de sorte qu'un faible débit laminaire de fuite est obtenu entre chaque face latérale 18a de l'élément 18 et la face latérale 15a en regard du capot 15, pour assurer une bonne étanchéité latérale.

La forme et l'aire de la section transversale du conduit acoustique 19 sont choisies de sorte à assurer la continuité de la section transversale, constante en forme et/ou en aire, du conduit d'air 3, ou encore de sorte à assurer la progressivité de l'évolution de la forme et/ou de l'aire de cette section transversale. Par exemple, la section transversale du conduit d'air 3 peut être constante et équivalente à celle d'une section circulaire d'un diamètre de 50 à 25 mm environ, ou encore être progressivement décroissante de l'extrémité amont, c'est-à-dire de la sortie du plenum 11, jusqu'à l'extrémité aval, c'est-à-dire l'entrée dans la culasse 2, de sorte que chaque conduit d'air 3 soit légèrement convergent. Mais le conduit acoustique 19 peut également assurer la transition d'une première forme de section, par exemple carrée ou rectangulaire, dans les tubes amont 8 et 9, à une seconde forme de section, par exemple circulaire ou oblongue, dans le tube aval 4, et également dans l'embout tubulaire 16 de sortie du capot 15.

Pour être entraîné en rotation et basculer de l'une à l'autre des deux positions extrêmes, le moyeu 22 de chaque élément basculant 18 est axialement traversé d'un alésage de section transversale carrée logeant une portée d'entraînement de section carrée ou à méplats correspondante, représentée en 23 sur les figures 1 à 4, et retenue sur un axe d'entraînement 24 commun à tous les éléments 18 et qui traverse toutes les portées 23 assurant également le centrage et l'indexation en position angulaire des éléments 18. Ces éléments basculants 18 sont ainsi simultanément entraînés par l'unique axe de manoeuvre 24 et ses portées 23, qui peuvent être des portées tubulaires solidarisées autour d'un axe 24 cylindrique, ou rapportées coulissantes avec un jeu axial sur cet axe 24, pour faciliter le centrage et le pivotement des éléments basculants 18 dans les capots 15, comme décrit dans le document FR-A-2 724 418 de la Demanderesse, pour l'entraînement simultané en rotation de volets basculants dans un collecteur d'admission, et auquel on se reportera pour toutes précisions sur la structure et le montage de ce mécanisme d'entraînement simultané en rotation.

Du fait de la positiion du moyeu 22 en aval du conduit acoustique 19 et latéralement décalée vers l'extérieur par rapport à la courbure de ce conduit 19 et au plenum 11, un pivotement de l'élément 18 avec une faible amplitude angulaire suffit à faire passer cet élément 18 de l'une à l'autre de ces deux positions extrêmes, ce qui est très avantageux pour la commande de pivotement et pour l'étanchéité latérale entre les faces latérales en regard de l'élément 18 et du capot 15.

Comme décrit également dans le document précité, une extrémité de l'axe commun 24 de manoeuvre des éléments basculants 18 fait saillie à l'extérieur du corps de collecteur 10 et des capots 15, et cette extrémité peut être entraînée en rotation autour de l'axe géométrique A par un actionneur de manoeuvre assemblé sur le côté du corps de collecteur 10. Cet actionneur peut être un moteur électrique, qui entraîne directement en rotation l'axe commun 24, ou, comme représenté schématiquement sur la figure 5, un actionneur pneumatique 25 à membrane 26 déplaçant une tige de commande 27, également représentée sur les figures 2 et 3, et dont l'extrémité externe à l'actionneur 25 est articulée en 28 sur une extrémité d'une biellette 29 solidaire, par son autre extrémité, de ladite extrémité de l'arbre 24 qui est accessible hors du corps de collecteur 10. Sur les figures 2 et 3, la biellette 29 est schématisée en traits interrompus s'étendant selon son axe longitudinal.

A la traversée de chaque paroi latérale 15a d'un capot 15 par l'axe 24, une bonne étanchéité vis-à-vis de l'atmosphère est assurée par un joint d'étanchéité 24a monté autour de l'axe 24, à l'intérieur du capot 15, par exemple dans une bague 15b entre la face latérale 15a considérée de ce capot 15 et une extrémité axiale 23a plus épaisse correspondante de la portée 23 de centrage, d'indexage et d'entraînement logée dans le moyeu 22 de l'élément basculant 18 correspondant.

Sur la figure 5, l'une des chambres délimitées dans l'actionneur 25 par la membrane 26 et qui loge un ressort de rappel 30, est reliée par une conduite 31 à une voie d'une vanne trois voies 32 à commande électrique et débit de fuite commandé par une seconde voie 33, et dont la troisième voie est reliée par une conduite 34 au collecteur d'admission, en aval du corps papillon 13, de sorte à être sensible à la dépression à l'admission du moteur. Ainsi, lorsque le moteur ne fonctionne pas, le ressort 30 rappelle la membrane 26 et la tige 27 dans une position de rotation de la biellette 29 et de l'axe 24 correspondant à la configuration courte de la figure 2, représentée en traits interrompus sur la figure 5. Au démarrage du moteur, dès qu'une dépression suffisante s'est établie dans le collecteur d'admission, la membrane 26 déplace la tige 27 contre le ressort 30, qui est comprimé dans la chambre de l'actionneur 25 qui le reçoit et qui est en communication par la vanne 32 avec la conduite 34 en dépression par l'aspiration moteur. De la sorte, et aux faibles régimes du moteur, la configuration longue de la figure 3 est obtenue par rotation de la biellette 29 et de l'arbre 24 dans la position représentée en traits pleins sur la figure 5, l'angle de basculement de chaque élément 18 étant schématisé par une double flèche sur cette figure 5. Lorsque le moteur fonctionne à régime élevé, la dépression dans le collecteur d'admission n'est pas suffisante pour maintenir le ressort 30 comprimé, et ce dernier rappelle le mécanisme en configuration courte de la figure 2.

Le collecteur décrit ci-dessus peut être réalisé en deux pièces principales en matière de synthèse armée de fibres, par exemple de verre, les deux pièces étant assemblées au niveau des manchons flexibles 17. L'une de ces deux pièces est une pièce aval, constituée des quatre tubes aval 4 et de la bride 5 de fixation à la culasse 2 du moteur 1, avec les logements et sièges d'injecteur 6. L'autre pièce est une pièce amont constituée du corps de collecteur 10, de la bride 12 de fixation et de support du corps papillon 13, des tubes amont court 8 et long 9 et enfin des capots 15, cette pièce amont étant également réalisée en une matière de synthèse par exemple moulable renforcée de fibres. Enfin, chaque élément basculant 18 est moulé d'une seule pièce de préférence en matière de synthèse. Toutes les parties du collecteur sont dimensionnées pour éviter les vibrations acoustiques, et présentent une épaisseur de paroi suffisante, par exemple de l'ordre de 3 mm, pour éviter les déformations plastiques en service.

La fixation du collecteur sur le bloc moteur 1 peut être complétée par deux organes d'appui (non représentés) à amortissement de vibrations, du type "silent bloc", montés entre le corps de collecteur 10, au plus près du bloc moteur 1, et ce dernier. On obtient ainsi un collecteur d'admission présentant un niveau d'émission sonore faible tout en procurant une réponse acoustique bien adaptée aux différents régimes de fonctionnement du moteur.

## Revendications

1. Collecteur d'admission d'air pour moteur (1) à combustion interne alimenté en carburant par injection, du type comprenant, pour chaque chambre de combustion du moteur (1), un conduit d'air (3) dont une partie aval comprend un unique tronçon de tube (4), raccordé à au moins une bride (5) de fixation à une culasse (2) du moteur (1), et dont une partie amont (7) comprend deux tronçons de tube (8, 9), dont un tronçon amont court (8) et un tronçon amont long (9), alimentés chacun en air par son entrée amont depuis des moyens (13) de commande du débit d'air d'alimentation, tels qu'un corps papillon, la sortie aval de chaque tronçon de tube amont (8, 9) étant destinée à être mise en communication avec l'entrée amont de l'unique tronçon de tube aval (4), par un élément (18) monté entre les parties amont (7) et aval (4) de chaque conduit d'air (3), et traversé d'un conduit acoustique (19), ledit élément (18) étant mobile entre deux positions extrêmes, dans l'une desquelles ledit élément (18) obture ledit tronçon de tube amont court (8) alors que son conduit acoustique (19) raccorde ledit tronçon de tube amont long (9) audit tronçon de tube aval (4), tandis que dans l'autre position extrême, ledit élément (18) obture ledit tronçon de tube amont long (9) alors que son conduit acoustique (19) raccorde ledit tronçon de tube amont court (8) audit tronçon de tube aval (4), caractérisé en ce que ledit élément (18) est un élément escamotable, logé et monté basculant dans un capot (15), et qui présente, perpendiculairement à son axe (A) de basculement, deux faces latérales (18a) qui glissent sans contact frottant chacune sur l'une respectivement de deux faces latérales (15a) du capot (15) lorsque ledit élément escamotable (18) bascule dans ledit capot (15), de manière à assurer par effet de laminage une bonne étanchéité latérale entre l'élément (18) et son capot (15).

2. Collecteur d'admission selon la revendication 1, caractérisé en ce que, sur ledit élément escamotable (18), ledit conduit acoustique (19) est délimité entre deux obturateurs (20, 21), dont chacun obture l'un respectivement desdits tronçons de tube amont court (8) et long (9) dans l'une respectivement desdites positions extrêmes.

3. Collecteur d'admission selon l'une des revendications 1 et 2, caractérisé en ce que ledit capot (15) est solidaire d'un corps (10) de collecteur délimitant un plenum (11) alimenté en air par lesdits moyens (13) de commande de débit d'air, et dans lequel chacun desdits tronçons de tube amont court (8) et long (9) de chaque conduit d'air (3) s'ouvre par son entrée amont.

4. Collecteur d'admission selon la revendication 3, caractérisé en ce que ledit tronçon de tube amont long (9) s'étend au moins partiellement à l'intérieur dudit corps (10) de collecteur le long d'une face interne de ce corps (10) de collecteur, sur au moins une partie de la périphérie du plenum (11).

5. Collecteur d'admission selon l'une quelconque des revendications 1 à 4, caractérisé en ce que chaque élément escamotable (18) présente un moyeu (22) traversé par un axe de manoeuvre (24) par lequel l'élément escamotable (18) est pivoté pour basculer de l'une à l'autre des deux positions extrêmes.

6. Collecteur d'admission selon la revendication 5, caractérisé en ce que tous les éléments escamotables (18) sont simultanément entraînés par un unique axe de manoeuvre (24) présentant, pour chaque élément escamotable (18), une portée (23) de centrage, d'indexation et d'entraînement en rotation qui se loge dans un alésage de forme correspondante du moyeu (22) de l'élément escamotable (18) correspondant.

7. Collecteur d'admission selon la revendication 6, caractérisé en ce qu'une extrémité de l'axe commun de manoeuvre (24) fait saillie à l'extérieur du corps de collecteur (10) et des capots (15) et est attaquée soit directement par un actionneur tel qu'un moteur électrique, soit par un embiellage (27-28-29) la reliant à un actionneur (25), par exemple pneumatique à membrane (26).

8. Collecteur d'admission selon l'une quelconque des revendications 1 à 7, caractérisé en ce que chaque élément escamotable (18) peut être immobilisé dans une position intermédiaire entre lesdites deux positions extrêmes, afin d'assurer une obstruction partielle et simultanée des deux tronçons de tube amont (8, 9).

9. Collecteur d'admission selon l'une quelconque des revendications 1 à 8, caractérisé en ce que ledit conduit acoustique (19) de chaque élément escamotable (18) présente une section transversale assurant la continuité de section, en forme et/ou en dimension, entre ledit tronçon de tube aval (4), d'une part, et, d'autre part, chacun desdits tronçons de tube amont (8, 9).

10. Collecteur d'admission selon l'une quelconque des revendications 1 à 9, caractérisé en ce que chaque capot (15) présente, du côté de la sortie du conduit acoustique (19) de l'élément escamotable (18) correspondant, un embout tubulaire (16) raccordé de manière étanche (17) au tronçon de tube aval (4) correspondant.

## Patentansprüche

1. Lufteinlaßkrümmer für eine durch Kraftstoffeinspritzung gespeiste Brennkraftmaschine (1) von der Art, die für jede Verbrennungskammer der Maschine (1) einen Luftkanal (3) enthält, bei dem ein strömungsunterer Teil einen einzigen Rohrabschnitt (4) aufweist, der wenigstens mit einem Befestigungsflansch (5) an einem Zylinderkopf (2) der Maschine (1) angeschlossen ist, und bei dem ein strömungsoberer Teil (7) zwei Rohrabschnitte (8, 9) aufweist, von denen ein kurzer strömungsoberer Abschnitt (8) und ein langer strömungsoberer Abschnitt (9) jeweils über ihren strömungsoberen Einlaß von Mitteln (13) zur Steuerung des Speiseluftdurchsatzes, z.B. einem Klappenkörper, gespeist werden, wobei der strömungsuntere Auslaß jedes strömungsoberen Rohrabschnitts (8, 9) mit dem strömungsoberen Einlaß des einzigen strömungsunteren Rohrabschnitts (4) über ein Element (18) in Verbindung gesetzt werden soll, das zwischen dem strömungsoberen (7) und strömungsunteren Teil (4) jedes Luftkanals (3) angebracht und von einem akustischen Kanal (19) durchlaufen ist, wobei das genannte Element (18) zwischen zwei Endpositionen beweglich ist und in einer von diesen den kurzen strömungsoberen Rohrabschnitt (8) verschließt, während sein akustischer Kanal (19) den langen strömungsoberen Rohrabschnitt (9) mit dem strömungsunteren Rohrabschnitt (4) verbindet, wogegen das genannte Element (18) in der anderen Endposition den langen strömungsoberen Rohrabschnitt (9) verschließt, während sein akustischer Kanal (19) den kurzen strömungsoberen Rohrabschnitt (8) mit dem strömungsunteren Rohrabschnitt (4) verbindet, **dadurch gekennzeichnet**, daß das genannte Element (18) ein einschwenkbares Element ist, das in einer Haube (15) kippbar unter- und angebracht ist und das senkrecht zu seiner Kippachse (A) zwei Seitenflächen (18a) aufweist, die jeweils ohne reibende Berührung an jeweils einer von zwei Seitenflächen (15a) der Haube (15) gleiten, wenn das genannte einschwenkbare Element (18) in der Haube (15) kippt, um eine gute seitliche Dichtigkeit zwischen dem Element (18) und seiner Haube (15) durch Laminareffekt sicherzustellen.

2. Einlaßkrümmer nach Anspruch 1, **dadurch gekennzeichnet**, daß beim einschwenkbaren Element (18) der akustische Kanal (19) zwischen zwei Verschlüssen (20, 21) abgegrenzt ist, von denen jeder jeweils einen vom genannten kurzen (8) und langen strömungsoberen Rohrabschnitt (9) in jeweils einer der Endpositionen abschließt.

3. Einlaßkrümmer nach einem der Ansprüche 1 und 2, **dadurch gekennzeichnet**, daß die Haube (15) mit einem Krümmerkörper (10) vereint ist, der einen Sammelraum (11) abgrenzt, der über die genannten Mittel (13) zur Steuerung des Luftdurchlasses mit Luft gespeist wird und in welchem sich sowohl der kurze (8) als auch der lange strömungsobere Rohrabschnitt (9) jedes Luftkanals (3) über ihren strömungsoberen Einlaß öffnen.

4. Einlaßkrümmer nach Anspruch 3, **dadurch gekennzeichnet**, daß sich der lange strömungsobere Rohrabschnitt (9) zumindest teilweise ins Innere des Krümmerkörpers (10) entlang einer Innenfläche dieses Krümmerkörpers (10) über wenigstens einen Teil des Randes des Sammelraums (11) erstreckt.

5. Einlaßkrümmer nach einem der Ansprüche 1 bis 4, **dadurch gekennzeichnet**, daß jedes einschwenkbare Element (18) eine Nabe (22) aufweist, die von einer Betätigungsachse (24) durchlaufen wird, mit der das einschwenkbare Element (18) zum Kippen von der einen in die andere der beiden Endpositionen geschwenkt wird.

6. Einlaßkrümmer nach Anspruch 5, **dadurch gekennzeichnet**, daß alle einschwenkbaren Elemente (18) gleichzeitig durch eine einzige Betätigungsachse (24) angetrieben sind, die für jedes einschwenkbare Element (18) einen Zentrier-, Sperr- und Drehantriebssitz (23) aufweist, der in einer Bohrung von entsprechender Form der Nabe (22) des entsprechenden einschwenkbaren Elements (18) untergebracht ist.

7. Einlaßkrümmer nach Anspruch 6, **dadurch gekennzeichnet**, daß ein Ende der gemeinsamen Betätigungsachse (24) aus dem Krümmerkörper (10) und den Hauben (15) nach außen hervorsteht und entweder direkt durch eine Betätigungseinrichtung wie z.B. einen Elektromotor oder durch ein Gestänge (27-28-29) angetrieben ist, das es mit einer Betätigungseinrichtung (25), z.B. einer pneumatischen mit Membran (26), verbindet.

8. Einlaßkrümmer nach einem der Ansprüche 1 bis 7, **dadurch gekennzeichnet**, daß jedes einschwenkbare Element (18) in einer Zwischenposition zwischen den beiden Endpositionen bewegungsgehemmt werden kann, um eine teilweise und gleichzeitige Versperrung der beiden strömungsoberen Rohrabschnitte (8, 9) zu gewährleisten.

9. Einlaßkrümmer nach einem der Ansprüche 1 bis 9, **dadurch gekennzeichnet**, daß der akustische Kanal (19) jedes einschwenkbaren Elements (18) einen Querschnitt aufweist, der die Querschnittskontinuität in der Form und/oder in der Abmessung zwischen dem strömungsunteren Rohrabschnitt (4) einerseits und jedem der strömungsoberen Rohrabschnitte (8, 9) andererseits gewährleistet.

10. Einlaßkrümmer nach einem der Ansprüche 1 bis 9, **dadurch gekennzeichnet**, daß jede Haube (15) auf der Seite des Auslasses des akustischen Kanals (19) des entsprechenden einschwenkbaren Elements (18) einen rohrförmigen Ansatz (16) aufweist, der in abdichtender Weise (17) an den entsprechenden strömungsunteren Rohrabschnitt (4) angeschlossen ist.

## Claims

1. Air intake manifold for a fuel-injected internal combustion engine (1), of the type comprising, for each combustion chamber of the engine (1), an air duct (3), a downstream part of which comprises a single length of tube (4) connected to at least one flange (5) for attaching to a cylinder head (2) of the engine (1), and an upstream part (7) of which comprises two lengths of tube (8, 9), namely a short upstream length (8) and a long upstream length (9), each of which is fed with air via its upstream inlet from means (13) of controlling the flow rate of inlet air, such as a throttle body, the downstream outlet of each length of upstream tube (8, 9) being intended to be placed in communication with the upstream inlet of the single length of downstream tube (4) via an element (18) mounted between the upstream part (7) and downstream part (4) of each air duct (3), and through which there passes an acoustic bore (19), said element (18) being able to move between two extreme positions, in one of which said element (18) closes said short upstream length of tube (8) while its acoustic bore (19) connects said long upstream length of tube (9) to said downstream length of tube (4), whereas in the other extreme position, said element (18) closes said long upstream length of tube (9) while its acoustic bore (19) connects said short upstream length of tube (8) to said downstream length of tube (4), characterized in that said element (18) is a retractable element, housed and mounted to pivot in a housing (15), and having, perpendicular to its axis (A) of pivoting, two lateral faces (18a) each of which slides without rubbing contact over a respective one of two lateral faces (15a) of the housing (15) when said retractable element (18) pivots in said housing (15), so as to produce a good lateral seal between the element (18) and its housing (15) by throttling.

2. Intake manifold according to claim 1, characterized in that, on said retractable element (18), said acoustic bore (19) is delimited between two shutters (20, 21), each of which closes a respective one of the short (8) and long (9) upstream lengths of tube in a respective one of said extreme positions.

3. Intake manifold according to one of claims 1 and 2, characterized in that said housing (15) is integral with a manifold body (10) delimiting a plenum chamber (11) supplied with air by said means (13) of controlling the air flow rate, and into which plenum each of said short (8) and long (9) upstream lengths of tube of each air duct (3) opens via its upstream inlet.

4. Intake manifold according to claim 3, characterized in that said long upstream length of tube (9) extends at least partially into said manifold body (10) along an internal face of this manifold body (10), around at least part of the periphery of the plenum chamber (11).

5. Intake manifold according to any one of claims 1 to 4, characterized in that each retractable element (18) has a hub (22) through which there passes an operating spindle (24) via which the retractable element (18) is pivoted from one of the two extreme positions to the other.

6. Intake manifold according to claim 5, characterized in that all the retractable elements (18) are driven simultaneously by a single operating spindle (24) which has, for each retractable element (18) , a centering, indexing and rotational-drive bearing surface (23) which is housed in a bore of corresponding shape of the hub (22) of the corresponding retractable element (18).

7. Intake manifold according to claim 6, characterized in that one end of the common operating spindle (24) projects out of the manifold body (10) and of the housings (15) and is acted upon either directly by an actuator such as an electric motor or by a linkage (27-28-29) connecting it to an actuator (25), for example a pneumatic actuator with membrane (26).

8. Intake manifold according to any one of claims 1 to 7, characterized in that each retractable element (18) can be immobilized in an intermediate position part way between said two extreme positions, in order partially and simultaneously to obstruct both upstream lengths of tube (8, 9).

9. Intake manifold according to any one of claims 1 to 8, characterized in that said acoustic bore (19) of each retractable element (18) has a transverse section that ensures continuity of section, in terms of shape and/or in terms of size, between said downstream length of tube (4), on the one hand, and, on the other hand, each of said upstream lengths of tube (8, 9).

10. Intake manifold according to any one of claims 1 to 9, characterized in that each housing (15) has, on the outlet side of the acoustic bore (19) of the corresponding retractable element (18), a tubular end piece (16) connected in a sealed fashion (17) to the corresponding downstream length of tube (4).
